# EUROPÄISCHE PATENTSCHRIFT

(11) **EP 4 011 734 B1**
(45) Veröffentlichungstag und Bekanntmachung des Hinweises auf die Patenterteilung: **03.07.2024**
(21) Anmeldenummer: 21206829.0
(22) Anmeldetag: 08.11.2021
(51) Int. Cl.: B60W 50/08, B60W 30/182, B60W 60/00

(54) **KRAFTFAHRZEUG, UMFASSEND EINE STEUEREINRICHTUNG ZUM AUTONOMEN FÜHREN DES KRAFTFAHRZEUGS, STEUEREINRICHTUNG UND VERFAHREN**
MOTOR VEHICLE COMPRISING A CONTROL DEVICE FOR AUTONOMOUSLY GUIDING THE MOTOR VEHICLE, CONTROL DEVICE AND METHOD
VÉHICULE AUTOMOBILE, COMPRENANT UN DISPOSITIF DE COMMANDE PERMETTANT DE CONDUIRE DE MANIÈRE AUTONOME LE VÉHICULE AUTOMOBILE, DISPOSITIF DE COMMANDE ET PROCÉDÉ

(30) Priorität: 08.12.2020 DE 102020215486
(43) Veröffentlichungstag der Anmeldung: 15.06.2022
(73) Patentinhaber: VOLKSWAGEN AG, 38440 Wolfsburg (DE)
(72) Erfinder: Bader, Viktor, 38448 Wolfsburg (DE)

(56) Entgegenhaltungen:
- DE-A1-102016 217 779
- DE-A1-102017 113 129
- DE-A1-102018 007 432
- DE-A1-102018 207 449
- DE-A1-102018 218 671
- US-A1- 2020 218 271

## Beschreibung

Die Erfindung eine Steuereinrichtung zum autonomen Führen eines Kraftfahrzeugs, ein Kraftfahrzeug mit einer solchen Steuereinrichtung und ein Verfahren zum Betreiben eines Kraftfahrzeugs.

Das Steuern von Einsatzfahrzeugen im Einsatz ist für die Kraftfahrzeugführer in vielen Fällen eine extreme Belastung. Einsatzfahrzeuge umfassen Feuerwehrwagen, Polizeiwagen, Krankenwagen, Notarztwagen, Räumdienstfahrzeuge wie Schneepflüge oder Straßenkehrmaschinen, Schwertransporter, Einsatzfahrzeuge des technischen Hilfswerkes oder Polizeifahrzeuge mit Wasserwerfern. Häufig müssen sich die Kraftfahrzeugführer vor dem Einsatz neben dem Steuern des Kraftfahrzeugs, welches häufig im Grenzbereich erfolgt, bereits mit dem anstehenden Einsatz am Einsatzort beschäftigen oder sich darauf mental einstellen. Bei Einsätzen an einem Einsatzort ist häufig sogar die körperliche Präsenz des Kraftfahrzeugführers selbst erforderlich, wobei es im wahrsten Sinne des Wortes um Leben und Tod gehen kann. Auch während einer Einsatzfahrt können bedeutende Informationen eintreffen, die durch das Einsatzpersonal im Kraftfahrzeug, insbesondere den Kraftfahrzeugführer, aufgenommen und verarbeitet werden müssen. Es macht also gerade bei Einsätzen mit Einsatzfahrzeugen Sinn, dass diese Kraftfahrzeuge autonom fahren können, um den Stress des Einsatzpersonals zu vermindern. Selbstverständlich muss dabei gewährleistet sein, dass autonom durchgeführte Einsatzfahrten für alle Beteiligten im Straßenverkehr möglichst sicher ausgeführt werden. Die Nutzung des autonomen Fahrens kann dann Einsatzfahrten sicherer gestalten und das Augenmerk des Einsatzpersonals mehr auf Einsätze an einem Einsatzort lenken.

Bei der Fahrt zum Einsatzort hängt ein Fahrstil des Kraftfahrzeugführers oft von der zeitlichen Dringlichkeit des Einsatzes ab. Für das Erreichen eines Einsatzortes bei einem zeitunkritischen Einsatz ist ein Fahrstil eines gewöhnlichen Verkehrsteilnehmers ausreichend, um den Einsatzort rechtzeitig zu erreichen. Bei zeitkritischen Einsätzen kann dagegen ein besonderer Fahrstil erforderlich sein, um den Einsatzort rechtzeitig erreichen zu können. Die zeitliche Dringlichkeit eines Einsatzes richtet sich beispielsweise nach einer Schwere einer Verletzung. Bei einer leichten Verletzung besteht nur eine geringe zeitliche Dringlichkeit, während bei schweren Verletzungen nur ein vergleichsweise kurzer Zeitraum zum Erreichen des Einsatzortes zur Verfügung steht. Um den Einsatzort rechtzeitig erreichen zu können, werden andere Verkehrsteilnehmer mittels Sirene aufgefordert, einen Weg für das Einsatzfahrzeug zu erreichen. Zudem können Einsatzfahrzeuge in diesem Fall über Rotlicht fahren.

In der FR 3 086 075 A1 ist ein elektronisches System zum Überwachen eines autonomen Fahrzeugs offenbart, das mit einem Fahrzeug-Betätigungsmodul und einem autonomen Antriebsmodul versehen ist.

Die Offenlegungsschrift DE 10 2018 010 331 A1 zeigt ein Verfahren und eine Vorrichtung zur Beeinflussung von autonomen Wechsellichtzeichenanlag durch Einsatzfahrzeuge entlang der prognostizierten Fahrtroute.

Die Patentschrift DE 10 2019 200 822 B3 beschreibt ein Verfahren zur Bildung einer Rettungsgasse auf einer mehrspurigen Straße, wobei ein Einsatzfahrzeug zum Datenaustausch mit mehreren Fahrzeugen über eine drahtlose Kommunikationsverbindung verbindbar ist und hierüber die Fahrzeuge zur Bildung einer Rettungsgasse aufgefordert werden.

Die Offenlegungsschrift DE 10 2018 130 447 A1 besagt: Um ein Warnsystem zu schaffen, mit dem im Wesentlichen alle Fahrzeuge, seien es jüngere oder ältere, seien es welche mit oder ohne Navigationsgerät, mit geringem technischen Aufwand nachgerüstet werden können, und das die Fahrer derjenigen Fahrzeuge warnt, die einem Einsatzfahrzeug auf dem Weg zu seinem unmittelbaren Einsatzziel potentiell die Bahn blockieren könnten, wird vorgeschlagen, dass die Einsatzfahrzeuge erfindungsgemäß ein hier als "Warnsignal" bezeichnetes Funksignal mit einem signalsendenden Warnsystem mit niedriger Sendeleistung senden, und die Staufahrzeuge das gesendete Funksignal mit einem signalempfangenden Warnsystem empfangen, das unabhängig von Radio, Navigationsgerät oder Infotainmentgerät eine für den Fahrer sofort erkennbare Warnung zum Beispiel über eine rot blinkende LED ausgibt.

Die Offenlegungsschrift DE 10 2018 218 973 A1 von Bosch beschreibt ein Verfahren, dass eine Interaktion von autonomen Fahrzeugen mit Sondereinsatzfahrzeugen erlaubt, ohne diese zu behindern. Auch kann ein Sondereinsatzfahrzeug explizit in einen Verkehrskontext des autonomen Fahrzeuges eingeordnet werden, um somit keine unnötigen Anpassungen des Fahrverhaltens seitens des autonomen Fahrzeuges vorzunehmen.

Wie ein automatisches maschinelles Trainieren eines elektronischen Fahrzeugführungssystems ausgeführt werden kann, ist z.B. in der Audi Offenlegung DE 10 2018 211 726 A1 beschrieben. Die Offenlegung DE 10 2018 117 561 A1 von ZF Active Safety GmbH beschreibt ein Verfahren zum automatisierten Vermeiden einer Kollision eines Fahrzeugs mit einem Objekt (z.B. Fußgänger) im Umfeld des Fahrzeugs. Es wird eine Gesamtkollisionswahrscheinlichkeit für unterschiedliche Pfade ermittelt und geprüft, ob das Bewertungskriterium einen Schwellwert überschreitet, sowie bei Überschreiten des Schwellwerts ein Kollisionsvermeidungsmanöver ausgelöst wird.

In der Volkswagen Patentschrift DE 10 2016 218 080 B3 wird auch ein Vorgehen zur Bestimmung einer Kollisionswahrscheinlichkeit eines Fahrzeugs mit einem Objekt beschrieben.

Die Patentschrift DE 10 2014 004 395 B3 von Audi beschreibt die Ermittlung einer Gefahrsituation in dem Kraftfahrzeugumfeld, wobei bei Ermittlung einer Gefahrsituation durch die Verarbeitungseinrichtung ein Erkennungswert, der eine Wahrscheinlichkeit einer tatsächlichen Erkennung der Gefahrsituation durch den Fahrer beschreibt, ermittelt wird, indem wenigstens eine einen physiologischen Parameter des Fahrers beschreibende, durch wenigstens ein den Fahrer zugeordnetes Erfassungsmittel erfasste Fahrerinformation ausgewertet wird.

Für das autonome Einsatzfahrzeug würde für einen autonomen Betrieb der Fahrer und dessen erfassten physiologischen Parameteraus aus diesem Patent entfallen entfallen-Bei der Wahrscheinlichkeitsbewertung für mögliche Unfälle fließt mit ein, dass bei dringenden Einsatzfahrten üblicherweise z.B. ein Martinshorn und Warn-/ Blinklichter aktiviert sind und damit andere Verkehrsteilnehmer gewarnt werden. Darüber hinaus soll in die Risikobewertung einfließen, welche Fahrzeuge in unmittelbarer Umgebung des Einsatzfahrzeuges autonom Fahren und direkt benachrichtigt werden können bzw. benachrichtigt sind und/oder sogar zurückgemeldet haben, dass sie sich Risiko minimierend verhalten werden und somit sich mit der Fahrweise bereits möglichst in Kombination mit dem Einsatzfahrzeug so verhalten, dass mindestens keine Aktionen ausgeführt werden, die den vorgegebenen Risikoschwellwert überschreiten lassen. Ansonsten muss das Einsatzfahrzeug mit der Fahrweise auf die erhöhte Gefahrensituation reagieren.

In diesem Abschnitt sind Schriften genannt, die die Kommunikation zwischen einem Einsatzfahrzeug und umgebenden Fahrzeugen beschreiben (zur Bildung einer Rettungsgasse oder als Warnsignal). Außerdem ist beschrieben, dass ein Einsatzfahrzeug die Schaltung von Ampeln vorausschauend beeinflusst.

Die Offenlegungsschrift DE 10 2018 218 973 A1 von Bosch beschreibt ein Verfahren, das eine Interaktion von autonomen Fahrzeugen mit Sondereinsatzfahrzeugen erlaubt, ohne diese zu behindern. Auch kann ein Sondereinsatzfahrzeug explizit in einen Verkehrskontext des autonomen Fahrzeuges eingeordnet werden, um somit keine unnötigen Anpassungen des Fahrverhaltens seitens des autonomen Fahrzeuges vorzunehmen. Zur Förderung der Akzeptanz von autonom fahrenden Fahrzeugen ist es also erstrebenswert, dass sie im Straßenverkehr insbesondere bei Rettungseinsätzen möglichst wenig als Hindernis für (autonome) Einsatzfahrzeuge (z.B. Krankentransporte) in Erscheinung treten. Bei zukünftig autonom fahrenden Fahrzeugen wird daher verlangt werden, dass sie z.B. bei Rettungseinsätzen auf einer Autobahn selbstständig fähig sind, für Rettungs- oder Einsatzfahrzeuge eine Rettungsgasse zu bilden (siehe BMW-Anmeldung DE 10 2015 226 244 A1).

Aus dem Stand der Technik sind ferner die folgenden Druckschriften bekannt.

Die DE 10 2016 217 779 A1 offenbart ein Verfahren zum Betrieb eines Kraftfahrzeugs. In dem Verfahren ist es vorgesehen, dass das Kraftfahrzeug in dem Fall, dass eine Freigabebedingung erfüllt wird, vollautomatisiert zu einer vorgegebenen Zielposition geführt wird. Die Freigabebedingung hängt dabei von einer Zustandsinformation ab, die einen Zustand eines Insassen des Kraftfahrzeugs betrifft. Das Kraftfahrzeug wird in diesem Fall unabhängig von wenigstens einer Verkehrsregel, die den Fahrbetrieb des Kraftfahrzeugs bei Nichterfüllung der Freigabebedingung einschränkt, oder in Abhängigkeit einer modifizierten Fassung dieser Verkehrsregel geführt.

Die DE 10 2018 207 449 A1 beschreibt ein Verfahren zum Betrieb eines Kraftfahrzeugs, wobei eine einen Zustand eines Fahrzeuginsassen des Kraftfahrzeugs betreffende Zustandsinformation erfasst wird. Die Zustandsinformation oder eine in Abhängigkeit der Zustandsinformation ermittelte Notfallinformation wird an eine fahrzeugexterne Freigabeeinrichtung bereitgestellt. Falls eine Notfallbedingung erfüllt ist, wird durch die Freigabeeinrichtung eine Freigabeinformation an das Kraftfahrzeug gesendet. Das Kraftfahrzeug aktiviert bei einem Empfang der Freigabeinformation eine Warnbeleuchtung, strahlt ein akustisches Warnsignal ab. Zusätzlich oder alternativ dazu wird eine Schaltanweisung an wenigstens eine zur Verkehrsregelung dienende Lichtsignalanlage gesendet, um die Lichtsignalanlage umzuschalten.

Die DE 10 2018 007 432 A1 beschreibt ein Verfahren zum Betrieb eines Omnibusses. Es ist vorgesehen, dass ein Zustand von Fahrgästen im Omnibus mittels Sensoren überwacht wird und auf Basis erfasster Daten eine Trajektorie für eine Längsbeschleunigung und Querbeschleunigung des autonom fahrenden Omnibusses geplant wird.

Die US 2020/218 271 A1 offenbart ein Verfahren zur optimalen Einstellung von Fahreigenschaften für autonome Fahrzeuge.

Die DE 10 2017 113 129 A1 beschreibt Systeme und Verfahren für eine Aufhebung des Autonomverhaltens bei Nutzung einer Rettungsgasse. In dem Verfahren sendet ein autonomes Fahrzeug bei einem Erkennen eines medizinischen Notfalls bei einem Passagier eine Notfallanforderung aus. Ein Notfallrouter wählt eine Strecke von einer ersten Position des autonomen Fahrzeugs zu einer Notfallversorgungseinrichtung aus und weist Infrastrukturknoten entlang der Strecke an, Meldungen zu senden, um eine Rettungsgasse zu bilden.

Die DE 10 2018 218 671 A1 beschreibt ein Verfahren zum Betrieb eines autonomen Kraftfahrzeugs, bei dem eine Meldung bezüglich einer Katastrophe empfangen wird. In dem Verfahren wird eine Tür eines autonomen Kraftfahrzeugs zum Einstieg für eine in der Umgebung des autonomen Kraftfahrzeugs erfassten Person geöffnet. Das autonome Kraftfahrzeug wird anschließend zu einem sicheren Ort bewegt.

Es ist eine Aufgabe der Erfindung, eine Möglichkeit bereitzustellen, einen Fahrstil eines autonomen Kraftfahrzeugs in Abhängigkeit einer Dringlichkeit eines Einsatzes einstellen zu können.

Die Erfindung betrifft ein Kraftfahrzeug, umfassend eine Steuereinrichtung zum autonomen Führen des Kraftfahrzeugs. Bei dem Kraftfahrzeug kann es sich insbesondere um einen Personen- oder Lastkraftwagen handeln, der als Einsatzwagen eingerichtet ist. Die Steuereinrichtung zum autonomen Führen des Kraftfahrzeugs kann beispielsweise ein Computer sein, der mit einer Einrichtung zur Erfassung eines Kraftfahrzeugumfeldes ausgestattet sein kann. In der Steuereinrichtung ist ein Regelsatz zum Vorgeben eines Fahrverhaltens beim Führen des Kraftfahrzeugs durch die Steuereinrichtung gespeichert, der vorbestimmte Regeln umfasst. Mit anderen Worten ist in der Steuereinrichtung ein Regelsatz hinterlegt, der vorgibt, wie das Kraftfahrzeug durch die Steuereinrichtung geführt werden soll. Die Regeln können beispielsweise gesetzliche Verkehrsregeln, Vorgaben an eine einzuhaltende Kraftfahrzeugdynamik während der Fahrt oder Vorgaben in Bezug auf eine Routenplanung zum Erreichen eines Einsatzortes umfassen. Die Steuereinrichtung ist dazu eingerichtet, das Kraftfahrzeug gemäß einem von zumindest zwei auswählbaren Fahrmodi zu führen, wobei in einem Normalfahrmodus alle vorbestimmten Regeln des Regelsatzes zum Führen des Kraftfahrzeugs durch die Steuereinrichtung einzuhalten sind. Mit anderen Worten ist es vorgesehen, dass das Kraftfahrzeug gemäß eines wählbaren von zumindest zwei Fahrmodi durch die Steuereinrichtung geführt werden kann. In dem ersten der zumindest zwei auswählbaren Fahrmodi ist es vorgesehen, dass alle der vorbestimmten Regeln des Regelsatzes zum Führen des Kraftfahrzeugs durch die Steuereinrichtung obligatorisch sind. Mit anderen Worten ist die Steuereinrichtung dazu eingerichtet, das Kraftfahrzeug so zu führen, dass alle Verkehrsregeln eingehalten werden, die Vorgaben in Bezug auf die Kraftfahrzeugdynamik obligatorisch sind, und die Route entsprechend der Vorgaben gewählt wird.

Die Steuereinrichtung ist dazu eingerichtet, einen aktuellen Risikowert während einer Fahrt zu berechnen. Mit anderen Worten ist die Steuereinrichtung dafür vorgesehen, nach einem vorbestimmten Verfahren zu berechnen, wie hoch in einer momentanen Verkehrssituation und/oder bei einem aktuellen Fahrstil die Gefahr eines Unfalls ist. Der Risikowert kann sich auf eine Gefährdung des geführten Kraftfahrzeugs in der Umgebung, eine Gefährdung des Kraftfahrzeugs durch andere Verkehrsteilnehmer und/oder eine Gefährdung anderer Verkehrsteilnehmer durch das geführte Kraftfahrzeug beziehen. Der Risikowert kann beispielsweise eine momentane Wahrscheinlichkeit eines Verlassens der Straße oder eines Unfalls mit einem anderen Verkehrsteilnehmer beschreiben.

Es ist vorgesehen, dass in einem Einsatzfahrmodus zumindest eine ausgewählte Regel der vorbestimmten Regeln des Regelsatzes zum Führen des Kraftfahrzeugs durch die Steuereinrichtung nur eingehalten wird, falls der aktuelle Risikowert ein vorbestimmtes Risikokriterium erfüllt. Das Risikokriterium kann einen Zustand erhöhter Unfallgefahr beschreiben. Es kann beispielsweise vorgesehen sein, dass das vorbestimmte Risikokriterium sich auf ein vorbestimmtes Werteintervall des Risikowerts bezieht. Die zumindest eine ausgewählte Regel wird in diesem Fall nur eingehalten, falls der aktuelle Risikowert in einem vorbestimmten Werteintervall liegt. Es kann auch vorgesehen sein, dass der aktuelle Risikowert, je nach Definition des Risikowertes, oberhalb oder unterhalb eines vorbestimmten Risikoschwellenwerts liegt. Mit anderen Worten ist es vorgesehen, dass die zumindest eine ausgewählte Regel der vorbestimmten Regeln des Regelsatzes in dem Einsatzfahrmodus nicht obligatorisch ist, solange das Risikokriterium nicht erfüllt ist. Es kann beispielsweise vorgesehen sein, dass die ausgewählte Regel eine erlaubte Maximalgeschwindigkeit betrifft. Ist der Risikowert beispielsweise so definiert, dass er mit einer erhöhten Unfallgefahr ansteigt, kann das Risikokriterium eine Überschreitung des vorbestimmten Risikoschwellenwerts umfassen.

Ist der aktuelle Risikowert beispielsweise unterhalb des vorbestimmten Risikoschwellenwerts, ist das Risikokriterium nicht erfüllt. In diesem Fall darf die Steuereinrichtung das Kraftfahrzeug derart führen, dass die Maximalgeschwindigkeit durch das Kraftfahrzeug überschritten wird. Ist der aktuelle Risikowert oberhalb des vorbestimmten Risikoschwellenwerts ist das Risikokriterium erfüllt. In diesem Fall darf die Steuereinrichtung das Kraftfahrzeug nur auf eine Weise führen, in der die Maximalgeschwindigkeit nicht überschritten wird. Dadurch kann dem Umstand Rechnung getragen werden, dass eine Überschreitung der Maximalgeschwindigkeit bei einem erhöhten Risiko vermieden werden sollte. Mit anderen Worten ist es möglich, dass die ausgewählte Regel bei der Führung des Kraftfahrzeugs durch die Steuereinrichtung verletzt werden kann, solange das Risikokriterium nicht erfüllt ist.

Dadurch ergibt sich der Vorteil, dass der Fahrstil des Kraftfahrzeugs an eine Dringlichkeit eines Einsatzes angepasst werden kann, wobei das Risiko beschränkt werden kann.

Es ist vorgesehen, dass die Steuereinrichtung eine Eingabeeinrichtung aufweist, die dazu eingerichtet ist, das Risikokriterium in Abhängigkeit von einer Benutzereingabe festzulegen. Mit anderen Worten umfasst die Steuereinrichtung eine Eingabeeinrichtung, durch welche es ermöglicht ist, das Risikokriterium mittels Benutzereingaben einzustellen. Bei der Eingabeeinrichtung kann es sich beispielsweise um eine Tastatur oder einen berührungssensitiven Bildschirm handeln, der dazu eingerichtet ist, vorbestimmte Benutzereingaben zu erfassen. Die Eingabeeinrichtung ist dazu eingerichtet, in Abhängigkeit von der erfassten das Risikokriterium einzustellen. Es kann somit möglich sein, dass ein Insasse des Kraftfahrzeugs eine als berührungssensitiven Bildschirm ausgebildete Eingabeeinrichtung bedienen kann, um das Risikokriterium einzustellen.

Die Erfindung umfasst auch Weiterbildungen, durch die sich weitere Vorteile ergeben.

Eine Weiterbildung der Erfindung sieht vor, dass die zumindest eine ausgewählte Regel der vorbestimmten Regeln des Regelsatzes durch den Einsatzfahrmodus vorgegeben ist. Mit anderen Worten ist durch den Einsatzfahrmodus fest vorgegeben, welches die ausgewählte Regel der vorbestimmten Regeln ist, die in dem ausgewählten Einsatzfahrmodus verletzt werden darf. Es kann beispielsweise vorgesehen sein, dass eine Vielzahl an Einsatzfahrmodi in der Steuereinrichtung gespeichert sind, wobei sich die Einsatzfahrmodi in den vorab ausgewählten Regeln voneinander unterscheiden. Die Einsatzfahrmodi können dabei für jeweilige Einsatzszenarien optimiert sein.

Eine Weiterbildung der Erfindung sieht vor, dass die Steuereinrichtung dazu eingerichtet ist, einen aktuellen Fahrdynamikwert während einer Fahrt zu berechnen und das Kraftfahrzeug unter Einhaltung eines vorbestimmten Fahrdynamikschwellenwerts zu führen. Mit anderen Worten ist die Steuereinrichtung dazu eingerichtet, bei der Führung des Kraftfahrzeugs, den momentanen Fahrdynamikwert zu bestimmen und/oder zu erfassen. Der Fahrdynamikwert kann sich beispielsweise auf Kräfte beziehen, die während der Fahrt auf das Kraftfahrzeug und/oder die Insassen des Kraftfahrzeugs wirken. Durch den Fahrdynamikschwellenwert kann vorgeben sein, wie hoch beispielsweise eine Kraft sein darf, welche während der Fahrt auf die Insassen des Kraftfahrzeugs und/oder das Kraftfahrzeug wirken darf. Dadurch ergibt sich der Vorteil, dass das Fahrverhalten der Steuereinrichtung so festgelegt werden kann, dass beispielsweise die auf verletzte Personen oder sensible Geräte einwirkenden Kräfte während der Fahrt begrenzt werden können.

Eine Weiterbildung der Erfindung sieht vor, dass die Eingabeeinrichtung dazu eingerichtet ist, die zumindest eine ausgewählte Regel der vorbestimmten Regeln des Regelsatzes in dem Einsatzfahrmodus und/oder den Fahrdynamikschwellenwert in Abhängigkeit von der Benutzereingabe festzulegen. Mit anderen Worten umfasst die Steuereinrichtung die Eingabeeinrichtung, durch welche es ermöglicht ist, die zumindest eine ausgewählte Regel der vorbestimmten Regeln des Regelsatzes und/oder den Fahrdynamikschwellenwert mittels der Benutzereingaben einzustellen. Die Eingabeeinrichtung ist dazu eingerichtet, in Abhängigkeit von der erfassten Benutzereingabe die Regeln des Regelsatzes und/oder den Fahrdynamikschwellenwert einzustellen. Es kann somit möglich sein, dass ein Insasse des Kraftfahrzeugs eine als berührungssensitiven Bildschirm ausgebildete Eingabeeinrichtung bedienen kann, um die vorbestimmte Regel, und/oder den Fahrdynamikschwellenwert einzustellen. Dadurch ergibt sich der Vorteil, dass beispielsweise ein Arzt oder Sanitäter in Abhängigkeit eines Zustands des Patienten die Fahrdynamik einstellen kann. Ein berechtigter Kraftfahrzeuginsasse des Kraftfahrzeugs kann beispielsweise zwischen verschiedenen Fahrmodi des autonom durch die Steuereinrichtung geführten Einsatzfahrzeuges schalten und den autonomen Fahrbetrieb des Fahrbetriebs in seinen Grenzbereichen gegebenenfalls in Absprache mit einem Einsatzleiter einstellen.

Eine Weiterbildung der Erfindung sieht vor, dass die Steuereinrichtung eine Funkschnittstelle aufweist, die dazu eingerichtet ist, die zumindest eine ausgewählte Regel der vorbestimmten Regeln des Regelsatzes in dem Einsatzfahrmodus und/oder das Risikokriterium und/oder den Fahrdynamikschwellenwert in Abhängigkeit von einem empfangenen Funksignal auszuwählen. Mit anderen Worten ist die Funkschnittstelle dazu eingerichtet, ein Funksignal zu empfangen und in Abhängigkeit von dem empfangenen Funksignal die vorbestimmte Regel, das Risikokriterium und/oder der Fahrdynamikschwellenwert einzustellen. Dadurch ergibt sich der Vorteil, dass der Fahrstil der an einem Einsatz beteiligten Kraftfahrzeuge zentral von einer fahrzeugexternen Stelle beeinflusst werden kann. Es kann beispielsweise vorgesehen sein, dass eine Einsatzzentrale den Risikoschwellenwert des Risikokriteriums in Abhängigkeit einer aktuellen Situation am Einsatzort mittels einer Übertragung des Funksignals an die Funkschnittstelle anpasst. Es kann beispielsweise vorgesehen sein, dass durch das Funksignal durch die Einsatzzentrale ein niedriger Risikoschwellenwert eingestellt werden kann, wenn sich eine Situation am Einsatzort entspannt und die zeitliche Dringlichkeit dadurch abnimmt.

Eine Weiterbildung der Erfindung sieht vor, dass das Kraftfahrzeug eine Sensoreinrichtung aufweist, die dazu eingerichtet ist, vorbestimmte Notsituationen in einer Kraftfahrzeugkabine des Kraftfahrzeugs zu erfassen und die zumindest eine ausgewählte Regel der vorbestimmten Regeln des Regelsatzes und/oder das Risikokriterium und/oder den Fahrdynamikschwellenwert in Abhängigkeit von der vorbestimmten Notsituation auszuwählen. Mit anderen Worten ist die Sensoreinrichtung dazu eingerichtet, eine Kraftfahrzeugkabine des Kraftfahrzeugs zu überwache, um vorbestimmte Notsituationen zu erfassen. Die Sensoreinrichtung kann beispielsweise eine Einrichtung zur Überwachung von Lebensfunktionen eines Patienten sein. Die Sensoreinrichtung kann beispielsweise dazu eingerichtet sein, einen Herzschlag eines Patienten zu überwachen. Als vorbestimmte Notsituation kann beispielsweise ein vorbestimmter Frequenzbereich des Herzschlag definiert sein. Für den Fall, dass durch die Sensoreinrichtung die vorbestimmte Notsituation erfasst wird, kann die Sensoreinrichtung die Steuereinrichtung ansteuern, um beispielsweise den Fahrdynamikschwellenwert zu reduzieren. Dadurch kann eine Belastung des Patienten reduziert werden. Durch die Weiterbildung ergibt sich der Vorteil, dass eine automatische Anpassung des Fahrstils der Steuereinrichtung in den Notsituationen ermöglicht wird.

Unterschiedliche Risikolevel bzw. Maximalgeschwindigkeiten und/oder wirkende Maximalkräfte auf das Kraftfahrzeug/ auf Kraftfahrzeuginsassen aufgrund dynamischer Fahrmanöver bei einer Einsatzfahrt beim autonomen Betrieb des Einsatzfahrzeugs können somit automatisch angepasst werden in Abhängigkeit von Zuständen in der Kraftfahrzeugkabine. So kann beispielsweise bei der Erfassung der Notfallsituation eines transportierten Patienten, wobei es sich um Reanimationsversuchen an dem Patienten im Kraftfahrzeug durch das Einsatzpersonal handeln kann, automatisch eine Verlangsamung oder sogar einen Halt des Kraftfahrzeugs durch die Sensoreinrichtung eingeleitet werden. Wird zum Beispiel eine Rückenmarksverletzung bei einem transportierten Patienten vermutet, kann ein geringerer Schwellenwert für dynamisch auf das Kraftfahrzeug wirkende Kräfte vorgegeben werden.

Eine Weiterbildung der Erfindung sieht vor, dass die Steuereinrichtung dazu eingerichtet ist, das Kraftfahrzeug an einem Zielbereich gemäß erster Vorgaben an eine geographische Entladeposition zu führen und nach einem vorbestimmten Entladevorgang gemäß zweiter Vorgaben an eine geographische Beladeposition zu führen. Mit anderen Worten ist es vorgesehen, dass das Kraftfahrzeug in einem Zielbereich des Einsatzes zuerst an eine geographische Entladeposition geführt wird, welche durch die ersten Vorgaben geographisch vorgegeben und ausgewählt ist. Es kann vorgesehen sein, dass durch die ersten Vorgaben vorgegeben wird, dass das Kraftfahrzeug zu der Entladeposition in der Nähe eines Unfallortes geführt wird. Dabei können beispielsweise Verkehrsregeln betreffend erlaubte Haltepositionen vernachlässigt werden. Die Steuereinrichtung dazu eingerichtet nach einem vorbestimmten Entladevorgang gemäß zweiten Vorgaben an eine geographische beladene Situation zu Position zu fahren. Mit anderen Worten ist es vorgesehen, dass die Steuereinrichtung dazu eingerichtet ist, das Kraftfahrzeug nach dem der vorbestimmten Entladevorgang erfasst wurde an eine geographische Beladeposition zu fahren. Die geographische Beladeposition wird in Abhängigkeit von den zweiten Vorgaben ausgewählt. Bei dem Entladevorgang kann es sich beispielsweise um ein Verlassen des Kraftfahrzeugs durch die Rettungssanitäter handeln. Es kann sich bei dem Entladevorgang auch um ein Entladen einer Maschine aus einem Feuerwehrfahrzeug handeln. Nach dem Entladevorgang, dessen Abschluss beispielsweise bei einen Schließen einer Fahrertür durch einen Türsensor, oder bei einer Entfernung der Insassen von dem Kraftfahrzeug durch einen Umfeldsensor erfasst werden kann, kann durch die Steuereinrichtung eine Anfahrt der Beladeposition erfolgen. Die Auswahl der Beladeposition richtet sich nach den zweiten Vorgaben. Diese können beispielsweise für einen längeren Haltevorgang optimiert sein. So kann beispielsweise ein Rettungswagen nach dem Ausstieg der Rettungssanitäter an der Entladeposition in der Nähe des Patienten die Beladeposition anfahren, welche beispielsweise abseits der Straße sein kann, um eine Gefährdung des Kraftfahrzeugs oder der Insassen durch den Straßenverkehr zu vermeiden.

Das autonome Einsatzfahrzeug kann nach Eintreffen an einem Einsatzort selbstständig unterstützend vorgehen: So kann das Einsatzfahrzeug (z.B. ein Krankenwagen) zunächst einen ersten Halt finden, um möglichst schnell und räumlich in der Nähe des tatsächlichen Einsatzortes z.B. Rettungssanitäter und/oder einen Rettungsarzt zu einem Patienten kommen zu lassen. Danach kann das autonome Einsatzfahrzeug die Zeit nutzen sich vorausschauend selber so zu platzieren, dass ein Patient möglichst rasch und ungefährlich eingeladen werden kann und es nach dem Einladen des Patienten möglichst rasch eine Rückfahrt antreten kann. Die Erfindung umfasst noch ein Verfahren zum autonomen Führen eines Kraftfahrzeugs, wobei in der Steuereinrichtung ein Regelsatz zum Vorgeben eines Fahrverhaltens beim Führen des Kraftfahrzeugs durch die Steuereinrichtung, umfassend vorbestimmte Regeln, gespeichert ist. Durch die Steuereinrichtung wird das Kraftfahrzeug gemäß einem von zumindest zwei auswählbaren Fahrmodi geführt, wobei in einem Normalfahrmodus alle vorbestimmten Regeln des Regelsatzes zum Führen des Kraftfahrzeugs durch die Steuereinrichtung eingehalten werden. Durch die Steuereinrichtung wird ein aktueller Risikowert während einer Fahrt berechnet. Es ist vorgesehen, dass in einem Einsatzfahrmodus zumindest eine ausgewählte Regel der vorbestimmten Regeln des Regelsatzes zum Führen des Kraftfahrzeugs durch die Steuereinrichtung nur eingehalten wird, wenn der aktuelle Risikowert ein vorbestimmtes Risikokriterium erfüllt. Es ist vorgesehen, dass das vorbestimmte Risikokriterium durch eine Eingabeeinrichtung der Steuereinrichtung in Abhängigkeit von einer Benutzereingabe ausgewählt wird.

Die Erfindung betrifft ebenfalls eine Steuereinrichtung zum autonomen Führen des Kraftfahrzeugs, wobei in der Steuereinrichtung ein Regelsatz zum Vorgeben eines Fahrverhaltens beim Führen des Kraftfahrzeugs durch die Steuereinrichtung, umfassend vorbestimmte Regeln, gespeichert ist. Die Steuereinrichtung ist dazu eingerichtet, das Kraftfahrzeug gemäß einem von zumindest zwei auswählbaren Fahrmodi zu führen, wobei in einem Normalfahrmodus alle vorbestimmten Regeln des Regelsatzes zum Führen des Kraftfahrzeugs durch die Steuereinrichtung einzuhalten sind. Die Steuereinrichtung ist dazu eingerichtet, einen aktuellen Risikowert während einer Fahrt zu berechnen. Es ist vorgesehen, dass in einem Einsatzfahrmodus zumindest eine ausgewählte Regel der vorbestimmten Regeln des Regelsatzes zum Führen des Kraftfahrzeugs durch die Steuereinrichtung nur eingehalten wird, wenn der aktuelle Risikowert ein vorbestimmtes Risikokriterium erfüllt. Die Steuereinrichtung weist eine Eingabeeinrichtung auf, die dazu eingerichtet ist, das vorbestimmte Risikokriterium in Abhängigkeit von einer Benutzereingabe auszuwählen.

Zu der Erfindung gehören auch Weiterbildungen des erfindungsgemäßen Verfahrens und der erfindungsgemäßen Steuereinrichtung, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens und der erfindungsgemäßen Steuereinrichtung hier nicht noch einmal beschrieben.

Im Folgenden werden Ausführungsbeispiele der Erfindung beschrieben. Hierzu zeigt:

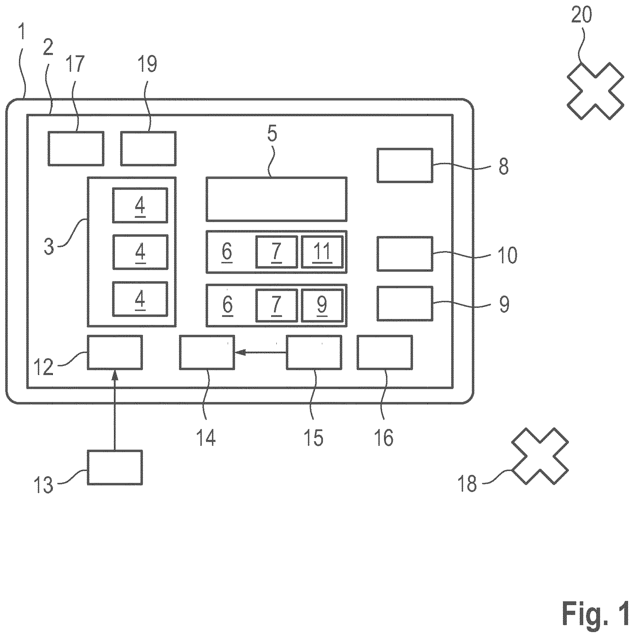

- Fig. 1: Ein Kraftfahrzeug, umfassend eine Steuereinrichtung zum autonomen Führen des Kraftfahrzeugs.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In der Figur sind funktionsgleiche Elemente jeweils mit denselben Bezugszeichen versehen.

Fig. 1 zeigt ein Kraftfahrzeug 1, wobei sich insbesondere um einen Personen- oder Lastkraftwagen handeln kann. Das Kraftfahrzeug 1 kann ein Einsatzfahrzeug sein. Das Kraftfahrzeug 1 kann eine Steuereinrichtung 2 umfassen, die dazu eingerichtet ist, das Kraftfahrzeug 1 autonom zu führen. Die Steuereinrichtung 2 kann einen Mikroprozessor umfassen und beispielsweise dazu eingerichtet sein, eine Umgebung des Kraftfahrzeugs 1 mittels Sensoren zu erfassen. In der Steuereinrichtung 2 kann ein Regelsatz 3 gespeichert sein, der ein Fahrverhalten beim Führen des Kraftfahrzeugs 1 durch die Steuereinrichtung 2 vorgeben kann. Der Regelsatz 3 kann vorbestimmte Regeln 4 umfassen, welche beispielsweise Verkehrsregeln, Vorgaben zur Routenplanung und Regeln betreffend die Kraftfahrzeugdynamik des Kraftfahrzeugs 1 umfassen. Die Steuereinrichtung 2 kann dazu eingerichtet sein, das Kraftfahrzeug 1 gemäß einem von zumindest zwei ausführbaren Fahrmodi 5, 6 zu führen. In einem Normalfahrmodus 5 ist das Kraftfahrzeug durch die Steuereinrichtung 2 derart zu führen, dass alle vorbestimmten Regeln 4 des Regelsatzes 3 zum Führen des Kraftfahrzeugs 1 durch die Steuereinrichtung 2 einzuhalten sind. Die mindestens zwei ausführbaren Fahrmodi 5, 6 umfassen auch mindestens einen Einsatzfahrmodus 6. In dem Einsatzfahrmodus 6 ist zumindest eine ausgewählte Regel 7 der vorbestimmten Regeln 4 des Regelsatzes 3 zum Führen des Kraftfahrzeugs 1 durch die Steuereinrichtung 2 ausgewählt, die nur durch die Steuereinrichtung 2 eingehalten wird, wenn ein aktueller Risikowert 8 ein vorbestimmtes Risikokriterium erfüllt. Das vorbestimmte Risikokriterium kann beispielsweise dadurch definiert sein, dass der aktuelle Risikowert 8 oberhalb eines vorbestimmten Risikoschwellenwerts 9 liegt. Der Risikowert 8 kann während der Fahrt des Kraftfahrzeugs 1 durch die Steuereinrichtung 2 berechnet werden und beispielsweise eine Wahrscheinlichkeit eines Unfalls des Kraftfahrzeugs mit der Umgebung oder einem anderen Verkehrsteilnehmer beschreiben. Der vorbestimmte Risikoschwellenwert 9 kann beispielsweise durch den gewählten Einsatzfahrmodus 6 vorgegeben sein. Es kann beispielsweise möglich sein, dass die ausgewählte Regel 7 eine Höchstgeschwindigkeit des Kraftfahrzeugs betrifft. In dem Einsatzfahrmodus kann das Kraftfahrzeug durch die Steuereinrichtung so geführt werden, dass die durch die ausgewählte Regel vorgeschriebene Maximalgeschwindigkeit nicht überschritten wird. Das Überschreiten ist jedoch nur zulässig, wenn der aktuelle Risikowert 8, der durch die Steuereinrichtung bestimmt wurde, nicht überschritten ist. In der Steuereinrichtung 2 können mehrere Einsatzfahrmodi 6 gespeichert sein, die sich in ihren Fahrdynamikschwellenwerten 11, ihren Risikoschwellenwerten 9 und der ausgewählten Regeln 7 voneinander unterscheiden und auf bestimmte Einsatzarten angepasst sind. Der Fahrdynamikwert 10 kann beispielsweise eine durch Beschleunigungssensoren erfasste Beschleunigung des Kraftfahrzeugs 1 umfassen. Die Steuereinrichtung kann eine Funkschnittstelle 12 aufweisen die dazu eingerichtet sein kann, Funksignale 13 zu empfangen. Die Funksignale können beispielsweise von einer Einsatzleiterzentrale ausgesandt worden sein. In Abhängigkeit von dem empfangenen Funksignal 13 kann durch die Steuereinrichtung 2 eine ausgewählte Regel 7 der vorbestimmten Regeln 4 in dem Einsatzfahrmodus 6 und/oder der Risikoschwellenwert 9 und/oder der Fahrdynamikschwellenwert 11 eingestellt werden. Die Steuereinrichtung kann auch eine Eingabeeinrichtung 14 aufweisen, die dazu eingerichtet sein kann eine ausgewählte Regel 7 der vorbestimmten Regeln 4 in dem Einsatzfahrmodus 6 und/oder der Risikoschwellenwert 9 und/oder der Fahrdynamikschwellenwert 11 in Abhängigkeit von einer Benutzereingabe 15 auszuwählen. Dadurch kann beispielsweise durch ein Kraftfahrzeuginsassen der Fahrmodus 5, 6 , oder der Risikoschwellenwert 9 während der Fahrt angepasst werden. Um eine automatische Anpassung des Fahrstils ermöglichen zu können, kann die Steuereinrichtung 2 eine Sensoreinrichtung 16 aufweisen, die dazu eingerichtet sein kann, vorbestimmten Notsituation in der Kraftfahrzeugkabine des Kraftfahrzeugs 1 zu erfassen und die zumindest eine ausgewählte Regel 7 und/oder den Risikoschwellenwert 9 und/oder den Fahrdynamikschwellenwert 11 in Abhängigkeit von der vorbestimmten Notsituation auszuwählen. Bei der Sensoreinrichtung 16 kann es sich, dass um eine Kamera handeln, welche die Kraftfahrzeugkabine erfassen kann. Es kann vorgesehen sein, dass durch die Steuereinrichtung 2 das Kraftfahrzeug 1 an einem Zielbereich gemäß erster Vorgaben 17 an eine geographische Endladepausenposition 18 geführt werden kann, und nach einem vorbestimmten Entladevorgang gemäß zweiter Vorgaben 19 an eine geographische Beladeposition 20 geführt werden kann.

Die Idee dieser Erfindungsmeldung ist es, dass ein autonom fahrbares Einsatzfahrzeug (mindestens) zwei einstellbare Fahrmodi besitzen soll. Ein erster autonomer Fahrmodus, der auch Normalfahrmodus genannt wird, ist für einen normalen Fahrbetrieb unter Einhaltung aller vorgegebenen Verkehrsregelungen eingerichtet. Ein mindestens zweiter Fahrmodus, der auch Einsatzfahrmodus genannt wird, ist für Fahrten im Einsatz, die deutlich über den normalen Fahrbetrieb (unter Einhaltung aller Regeln) hinausgehen und im Allgemeinen nach Bedarf bzw. Vorgaben definiert werden können. So kann der Steuereinrichtung beim Führen des Fahrzeugs erlaubt werden, bei einer Nicht-Überschreitung eines vorgegebenen Risikoschwellwertes, der ein Risiko für Unfälle/Kollisionen mit anderen Verkehrsteilnehmern angeben kann, ausgewählte Regeln der vorbestimmten Regeln zu überschreiten.

Im Einsatz kann dann das Fahrzeug dann ggf. im absoluten Halteverbot halten und/oder auch auf einem Rad- oder Fußweg stehen bleiben und/oder Neue maximale Kräfte, die auf das Fahrzeug z.B bei Kurvenfahrten oder Beschleunigungen wirken, können vorgegeben werden. Je nach Risikoeinschätzung der Fahrsituation des autonom fahrenden Einsatzfahrzeuges (Vorgehen dazu ist weiterunten beschrieben) und/oder je nach eingestuftem Einsatzszenario können (durch z.B. einen Einsatzleiter) für einen speziellen Einsatz spezielle Einsatzfahrmodi aus oben genannten mit für den speziellen Einsatz erlaubten Regelverstößen nach Vorgaben/Bedarf zusammenstellen. Für Geschwindigkeitsüberschreitungen oder auf das Fahrzeug wirkende dynamische Maximalkräfte können für Inner- und/oder Außerorts-Einsätze und/oder regional zusätzlich Limits gesetzt werden. Die vorgegebenen - für den Einsatz erlaubten - Regelüberschreitungen dürfen nur durchgeführt werden, wenn sichergestellt werden kann, dass keine weiteren Verkehrsteilnehmer und/oder das Einsatzfahrzeug selber wesentlich in Gefahr geraten können bzw. eine Risikoabschätzung (z.B. mit künstlicher Intelligenz) dies erlaubt. So kann eine angelernte künstliche Intelligenz für alle Fahrmanöver und Aktionen eine Wahrscheinlichkeitsbewertung hinsichtlich Gefahren für andere Verkehrsteilnehmer und das Einsatzfahrzeug selber durchführen.

Die kann folgendes bedeuten: dass an roten Ampeln nicht notwendigermaßen gehalten werden muss, und/oder eine Rettungsgasse beim Führen des Fahrzeugs genutzt werden kann und/oder die Fahrbahn/Straße verlassen werden kann und/oder eingezeichnete Fahrspuren nicht eingehalten werden müssen und/oder durchgezogene Fahrbahnmarkierungen gekreuzt werden können und/oder Geschwindigkeits- und/oder Vorfahrts- und/oder die "Rechts-Vor-Links"-Regeln nicht eingehalten werden müssen und/oder Privatgelände können bei Bedarf befahren werden können und/oder- entgegen einer erlaubten Fahrtrichtung bei Bedarf gefahren werden darf.

Es kann permanent (ggf. in definierten Zeitschritten) eine Wahrscheinlichkeit für die Kollisionsgefahr des Einsatzfahrzeugs mit anderen Verkehrsteilnehmer und/oder die Gefahr für einen Unfall des Einsatzfahrzeuges ohne beteiligte Verkehrsteilnehmer bestimmt werden, wobei bei allen Fahraktionen ein vorgegebener Wahrscheinlichkeitsschwellwert für Unfälle nicht überschritten werden darf.

In die eigene Risikobewertung der Fahrsituationen des autonomen Einsatzfahrzeuges, die durch den momentanen Risikowert beschrieben werden kann, und damit in die Anpassung der Fahrmanöver entsprechend einer ermittelten Wahrscheinlichkeit für eine Unfallgefahr kann folgendes einfließen: Die Wetterlage (Regen, Hagel usw.), der Fahrbahnzustand (Glätte, Schlaglöcher, Laub auf der Straße usw.), die Sichtfreiheit/Sichtweite (z.B. Nebel-, Smog-Zustand), der eigene Fahrzeugzustand (Alter der Reifen, Bremsen, Zustand der Umfeldsensorik usw.), Bekannte Gefahren-/Unfallschwerpunkte, Inwieweit (mit Umfeldsensorik des Einsatzfahrzeugs) sich erkannte autonome und nicht autonome Fahrzeuge/Personen im Umfeld des Einsatzfahrzeuges zurückgemeldet oder nicht zurückgemeldet haben, dass sie das Einsatzfahrzeug erkannt haben und ihre Fahrweise/ ihr Vorgehen Risiko-minimierend ausführen werden. Mithilfe der erkannten Fahrweise von umgebenden Fahrzeugen und/oder dem Verhalten von Personen oder von Fahrzeugführern in den Fahrzeugen, dem Verhalten von Radfahrern, E-Bike-, E-Scooter-Fahrern oder Fußgängern (z.B. vorhandener Blickkontakt) kann erkannt bzw. auf eine Unfall-Wahrscheinlichkeit geschlossen werden, was in die Gesamtwahrscheinlichkeit für eine Unfallgefahr des Einsatzfahrzeuges einfließen kann. Kollisionswahrscheinlichkeiten (siehe oben), eine Einstufung, Inwieweit die Verkehrssituation überblickt werden kann und eine Anwesenheit von nicht einsehbaren Verdeckungen durch z.B. stehende oder parkende Fahrzeuge, insbesondere bei einfallenden Straßen oder neben Gehwegen mit parkenden Fahrzeugen am Gehwegrand können ebenfalls bei der Bestimmung des momentanen Risikowertes berücksichtigt werden.

In einer weiteren Ausführung der Erfindung sind mindestens drei Fahrmodi einstellbar. In einem der Fahrmodi, dem Manuelfahrmodus, kann das Einsatzfahrzeug von einer Person wie heutige Einsatzfahrzeuge gefahren werden. Der zweite Fahrmodus, der Normalfahrmodus, beinhaltet einen autonomen "normalen" Fahrbetrieb unter Einhaltung aller vorgegebenen Verkehrsregelungen. Zumindest ein Einsatzfahrmodus beinhaltet Fahrten im Einsatz, die deutlich über den "normalen" Regeln-einhaltenden Fahrbetrieb hinausgehen können, aber unter Einhaltung der Nicht-Überschreitung eines vorgegebenen Risikoschwellwertes.

Entsprechend kann bei der Wahl eines Einsatzfahrmodus für einen Organspendetransport das Fahrzeug durch die Steuereinrichtung so geführt werden, dass sie mit einer höheren Geschwindigkeit als im Normalfahrmodus erfolgt, aber berücksichtigt wird, dass durch die auftretenden Kräfte ein Organ möglichst nicht beschädigt wird. Zu diesem Zweck kann in dem Einsatzfahrmodus für den Organspendetransport der Fahrdynamikschwellenwert so vorgegeben sein, dass erlaubte Maximalkräfte auf das Fahrzeug bei dem Führen des Fahrzeugs nicht überschritten werden

Es ist auch denkbar, dass ein Einsatzfahrzeug ohne Einsatzpersonal an Bord autonom zur Unterstützung zu einem Einsatzort fährt (um z.B. Rettungswerkzeug, Hilfmaterialien, Medikamente zu einem Einsatzort zu bringen oder ein Organspendetransport ausgeführt wird). Dann kann z.B. ein berechtigter Einsatzleiter außerhalb des Fahrzeugs, die Vorgaben - der für den speziellen Einsatz erlaubten Regelverstöße - drahtlos an das Einsatzfahrzeug übertragen und die Fahrzeugmodi im Einsatzfahrzeug nach Bedarf einstellen. In besonderen Fällen kann ggf. der Risikoschwellwert für Unfälle, der bei der autonomen Fahrt des Einsatzfahrzeugs in dem Einsatzfahrmodus nicht überschritten werden soll, angepasst werden, um ggf. besonderen Notfallsituationen gerecht zu werden.

## Patentansprüche

1. Steuereinrichtung (2) zum autonomen Führen eines Kraftfahrzeugs (1), wobei
- in der Steuereinrichtung (2) ein Regelsatz (3) zum Vorgeben eines Fahrverhaltens beim Führen des Kraftfahrzeugs (1) durch die Steuereinrichtung (2), umfassend vorbestimmte Regeln (4), gespeichert ist,
- die Steuereinrichtung (2) dazu eingerichtet ist, das Kraftfahrzeug (1) gemäß einem von zumindest zwei auswählbaren Fahrmodi zu führen, wobei in einem Normalfahrmodus (5) alle vorbestimmten Regeln (4) des Regelsatzes (3) zum Führen des Kraftfahrzeugs (1) durch die Steuereinrichtung (2) einzuhalten sind, und
- die Steuereinrichtung (2) dazu eingerichtet ist, einen aktuellen Risikowert (8) während einer Fahrt zu berechnen, und
- in einem Einsatzfahrmodus (6) zumindest eine ausgewählte Regel (7) der vorbestimmten Regeln (4) des Regelsatzes (3) zum Führen des Kraftfahrzeugs (1) durch die Steuereinrichtung (2) nur eingehalten wird falls der aktuelle Risikowert (8) ein vorbestimmtes Risikokriterium erfüllt,
**dadurch gekennzeichnet, dass**
- die Steuereinrichtung (2) eine Eingabeeinrichtung (14) aufweist, die dazu eingerichtet ist, das vorbestimmte Risikokriterium in Abhängigkeit von einer Benutzereingabe (15) auszuwählen.

2. Kraftfahrzeug, umfassend eine Steuereinrichtung nach Anspruch 1.

3. Kraftfahrzeug (1) nach Anspruch 2, **dadurch gekennzeichnet, dass** die zumindest eine ausgewählte Regel (7) der vorbestimmten Regeln (4) des Regelsatzes (3) in dem Einsatzfahrmodus (6) durch den Einsatzfahrmodus (6) vorgegeben ist.

4. Kraftfahrzeug (1) nach Anspruch 2 oder 3, **dadurch gekennzeichnet, dass** die Steuereinrichtung (2) dazu eingerichtet ist, einen aktuellen Fahrdynamikwert während einer Fahrt zu berechnen und die Steuereinrichtung (2) dazu eingerichtet ist, das Kraftfahrzeug (1) unter Einhaltung eines vorbestimmten Fahrdynamikschwellenwerts (11) zu führen.

5. Kraftfahrzeug (1) nach einem der vorhergehenden Ansprüche 2 bis 4, **dadurch gekennzeichnet, dass** die Eingabeeinrichtung (14 dazu eingerichtet ist, die zumindest eine ausgewählte Regel (7) der vorbestimmten Regeln (4) des Regelsatzes (3) in dem Einsatzfahrmodus (6) und/oder den Fahrdynamikschwellenwert (11), in Abhängigkeit von der Benutzereingabe (15) auszuwählen.

6. Kraftfahrzeug (1) nach einem der vorhergehenden Ansprücher 2 bis 5, **dadurch gekennzeichnet, dass** die Steuereinrichtung (2) eine Funkschnittstelle (12) aufweist, die dazu eingerichtet ist, die zumindest eine ausgewählte Regel (7) der vorbestimmten Regeln (4) des Regelsatzes (3) in dem Einsatzfahrmodus (6) und/oder das vorbestimmte Risikokriterium und/oder den Fahrdynamikschwellenwert (11), in Abhängigkeit von einem empfangenen Funksignal (13) auszuwählen.

7. Kraftfahrzeug (1) nach einem der vorhergehenden Ansprüche 2 bis 6, **dadurch gekennzeichnet, dass** das Kraftfahrzeug (1) eine Sensoreinrichtung (16) aufweist, die dazu eingerichtet ist, vorbestimmte Notsituationen in einer Fahrzeugkabine des Kraftfahrzeugs (1) zu erfassen, und die zumindest eine ausgewählte Regel (7) der vorbestimmten Regeln (4) des Regelsatzes (3) in dem Einsatzfahrmodus (6) und/oder das vorbestimmte Risikokriterium und/oder den Fahrdynamikschwellenwert (11), in Abhängigkeit von der vorbestimmten Notsituation auszuwählen.

8. Kraftfahrzeug (1) nach einem der vorhergehenden Ansprüche 2 bis 7, **dadurch gekennzeichnet, dass** die Steuereinrichtung (2) dazu eingerichtet ist, das Kraftfahrzeug (1) an einem Zielbereich gemäß erster Vorgaben (17) an eine geografische Entladeposition zu führen und nach einem vorbestimmten Entladevorgang gemäß zweiter Vorgaben (19) an eine geografische Beladeposition (20) zu führen

9. Verfahren zum autonomen Führen des Kraftfahrzeugs (1), wobei
- in der Steuereinrichtung (2) ein Regelsatz (3) zum Vorgeben eines Fahrverhaltens beim Führen des Kraftfahrzeugs (1) durch die Steuereinrichtung (2), umfassend vorbestimmte Regeln (4), gespeichert ist,
- die Steuereinrichtung (2) dazu eingerichtet ist, das Kraftfahrzeug (1) gemäß einem von zumindest zwei auswählbaren Fahrmodi zu führen, wobei in einem Normalfahrmodus (5) alle vorbestimmten Regeln (4) des Regelsatzes (3) zum Führen des Kraftfahrzeugs (1) durch die Steuereinrichtung (2) einzuhalten sind, und
- die Steuereinrichtung (2) dazu eingerichtet ist, einen aktuellen Risikowert (8) während einer Fahrt zu berechnen, und
- in einem Einsatzfahrmodus (6) zumindest eine ausgewählte Regel (7) der vorbestimmten Regeln (4) des Regelsatzes (3) zum Führen des Kraftfahrzeugs (1) durch die Steuereinrichtung (2) nur eingehalten wird, falls der aktuelle Risikowert (8) ein vorbestimmtes Risikokriterium erfüllt,
**dadurch gekennzeichnet, dass**
- das vorbestimmte Risikokriterium durch eine Eingabeeinrichtung (14) der Steuereinrichtung (2) in Abhängigkeit von einer Benutzereingabe (15) ausgewählt wird.

## Claims

1. Control device (2) for autonomous guidance of a motor vehicle (1), wherein
- a set of rules (3) for specifying driving behavior when the motor vehicle (1) is guided by the control device (2), comprising predetermined rules (4), is stored in the control device (2),
- the control device (2) is designed to guide the motor vehicle (1) according to one of at least two selectable driving modes, wherein all predetermined rules (4) of the set of rules (3) for guiding the motor vehicle (1) are adhered to by the control device (2) in a normal driving mode (5), and
- the control device (2) is designed to calculate a current risk value (8) during a journey, and
- in an emergency driving mode (6), at least one selected rule (7) of the predetermined rules (4) of the set of rules (3) for guiding the motor vehicle (1) is only adhered to by the control device (2) if the current risk value (8) fulfills a predetermined risk criterion,
**characterized in that**
- the control device (2) has an input device (14) which is designed to select the predetermined risk criterion according to a user input (15).

2. Motor vehicle comprising a control device according to claim 1.

3. Motor vehicle (1) according to claim 2, **characterized in that** the at least one selected rule (7) of the predetermined rules (4) of the set of rules (3) in the emergency driving mode (6) is specified by the emergency driving mode (6).

4. Motor vehicle (1) according to either claim 2 or claim 3, **characterized in that** the control device (2) is designed to calculate a current driving dynamics value during a journey and the control device (2) is designed to guide the motor vehicle (1) while maintaining a predetermined driving dynamics threshold value (11).

5. Motor vehicle (1) according to any of the preceding claims 2 to 4, **characterized in that** the input device (14) is designed to select the at least one selected rule (7) of the predetermined rules (4) of the set of rules (3) in the emergency driving mode (6) and/or the driving dynamics threshold value (11) according to the user input (15).

6. Motor vehicle (1) according to any of the preceding claims 2 to 5, **characterized in that** the control device (2) has a radio interface (12) which is designed to select the at least one selected rule (7) of the predetermined rules (4) of the set of rules (3) in the emergency driving mode (6) and/or the predetermined risk criterion and/or the driving dynamics threshold value (11) according to a received radio signal (13).

7. Motor vehicle (1) according to any of the preceding claims 2 to 6, **characterized in that** the motor vehicle (1) has a sensor device (16) which is designed to detect predetermined emergency situations in a vehicle compartment of the motor vehicle (1), and to select the at least one selected rule (7) of the predetermined rules (4) of the set of rules (3) in the emergency driving mode (6) and/or the predetermined risk criterion and/or the driving dynamics threshold value (11) according to the predetermined emergency situation.

8. Motor vehicle (1) according to any of the preceding claims 2 to 7, **characterized in that** the control device (2) is designed to guide the motor vehicle (1) to a geographical unloading position at a target region according to first specifications (17), and to guide it to a geographical loading position (20) after a predetermined unloading process according to second specifications (19).

9. Method for autonomous guidance of the motor vehicle (1), wherein
- a set of rules (3) for specifying driving behavior when the motor vehicle (1) is guided by the control device (2), comprising predetermined rules (4), is stored in the control device (2),
- the control device (2) is designed to guide the motor vehicle (1) according to one of at least two selectable driving modes, wherein all predetermined rules (4) of the set of rules (3) for guiding the motor vehicle (1) are adhered to by the control device (2) in a normal driving mode (5), and
- the control device (2) is designed to calculate a current risk value (8) during a journey, and
- in an emergency driving mode (6), at least one selected rule (7) of the predetermined rules (4) of the set of rules (3) for guiding the motor vehicle (1) is only adhered to by the control device (2) if the current risk value (8) fulfills a predetermined risk criterion,
**characterized in that**
- the predetermined risk criterion is selected by an input device (14) of the control device (2) according to a user input (15).

## Revendications

1. Dispositif de commande (2) pour la conduite autonome d'un véhicule automobile (1), dans lequel
- dans le dispositif de commande (2) est mémorisé un jeu de règles (3) pour la prescription d'un comportement de conduite lors de la conduite du véhicule automobile (1) par le dispositif de commande (2), comprenant des règles prédéterminées (4),
- le dispositif de commande (2) est conçu pour guider le véhicule automobile (1) selon l'un d'au moins deux modes de conduite pouvant être sélectionnés, dans lequel toutes les règles prédéterminées (4) du jeu de règles (3) pour la conduite du véhicule automobile (1) doivent être respectées par le dispositif de commande (2) dans un mode de conduite normal (5), et
- le dispositif de commande (2) est conçu pour calculer une valeur de risque actuelle (8) pendant un trajet, et
- dans un mode de conduite d'intervention (6), au moins une règle sélectionnée (7) parmi les règles prédéterminées (4) du jeu de règles (3) pour la conduite du véhicule automobile (1) n'est respectée par le dispositif de commande (2) que si la valeur de risque (8) actuelle remplit un critère de risque prédéterm iné,
**caractérisé en ce que**
- le dispositif de commande (2) présente un dispositif d'entrée (14) qui est conçu pour sélectionner le critère de risque prédéterminé en fonction d'une entrée d'utilisateur (15).

2. Véhicule automobile comprenant un dispositif de commande selon la revendication 1.

3. Véhicule automobile (1) selon la revendication 2, **caractérisé en ce que** l'au moins une règle sélectionnée (7) parmi les règles prédéterminées (4) du jeu de règles (3) dans le mode de conduite d'intervention (6) est prescrite par le mode de conduite d'intervention (6).

4. Véhicule automobile (1) selon la revendication 2 ou 3,
**caractérisé en ce que** le dispositif de commande (2) est conçu pour calculer une valeur actuelle de dynamique de conduite pendant un trajet et le dispositif de commande (2) est conçu pour conduire le véhicule automobile (1) en respectant une valeur seuil de dynamique de conduite (11) prédéterminée.

5. Véhicule automobile (1) selon l'une des revendications précédentes 2 à 4, **caractérisé en ce que** le dispositif d'entrée (14) est conçu pour sélectionner l'au moins une règle sélectionnée (7) parmi les règles prédéterminées (4) du jeu de règles (3) dans le mode de conduite d'intervention (6) et/ou la valeur seuil de dynamique de conduite (11), en fonction de l'entrée d'utilisateur (15).

6. Véhicule automobile (1) selon l'une des revendications précédentes 2 à 5, **caractérisé en ce que** le dispositif de commande (2) présente une interface radio (12) qui est conçue pour sélectionner l'au moins une règle sélectionnée (7) parmi les règles prédéterminées (4) du jeu de règles (3) dans le mode de conduite d'intervention (6) et/ou le critère de risque prédéterminé et/ou la valeur seuil de dynamique de conduite (11), en fonction d'un signal radio reçu (13).

7. Véhicule automobile (1) selon l'une des revendications précédentes 2 à 6, **caractérisé en ce que** le véhicule automobile (1) présente un dispositif de détection (16) qui est conçu pour détecter des situations d'urgence prédéterminées dans un habitacle du véhicule automobile (1), et pour sélectionner l'au moins une règle sélectionnée (7) parmi les règles prédéterminées (4) du jeu de règles (3) dans le mode de conduite d'intervention (6) et/ou le critère de risque prédéterminé et/ou la valeur seuil de dynamique de conduite (11), en fonction de la situation d'urgence prédéterminée.

8. Véhicule automobile (1) selon l'une des revendications précédentes 2 à 7, **caractérisé en ce que** le dispositif de commande (2) est conçu pour conduire le véhicule automobile (1) vers une position géographique de déchargement au niveau d'une zone cible conformément à des premières consignes (17) et pour le conduire vers une position géographique de chargement (20) après une opération de déchargement prédéterminée conformément à des secondes consignes (19).

9. Procédé pour la conduite autonome du véhicule automobile (1), dans lequel
- dans le dispositif de commande (2) est mémorisé un jeu de règles (3) pour la prescription d'un comportement de conduite lors de la conduite du véhicule automobile (1) par le dispositif de commande (2), comprenant des règles prédéterminées (4),
- le dispositif de commande (2) est conçu pour guider le véhicule automobile (1) selon l'un d'au moins deux modes de conduite pouvant être sélectionnés, dans lequel toutes les règles prédéterminées (4) du jeu de règles (3) pour la conduite du véhicule automobile (1) doivent être respectées par le dispositif de commande (2) dans un mode de conduite normal (5), et
- le dispositif de commande (2) est conçu pour calculer une valeur de risque actuelle (8) pendant un trajet, et
- dans un mode de conduite d'intervention (6), au moins une règle sélectionnée (7) parmi les règles prédéterminées (4) du jeu de règles (3) pour la conduite du véhicule automobile (1) n'est respectée par le dispositif de commande (2) que si la valeur de risque (8) actuelle remplit un critère de risque prédéterminé,
**caractérisé en ce que**
- le critère de risque prédéterminé est sélectionné par un dispositif d'entrée (14) du dispositif de commande (2) en fonction d'une entrée d'utilisateur (15).
